# EUROPEAN PATENT APPLICATION

(11) **EP 3 337 197 A1**
(43) Date of publication of application: **20.06.2018**
(21) Application number: 17206050.1
(22) Date of filing: 07.12.2017
(51) Int. Cl.: H04W 4/029, G08G 1/0967, G08G 1/16, G01S 19/45, G06K 9/00

(54) **METHOD AND SYSTEM FOR PERFORMING ADVANCED DRIVER ASSISTANCE SYSTEM FUNCTIONS USING BEYOND LINE-OF-SIGHT SITUATIONAL AWARENESS**

(30) Priority: 15.12.2016 US 201615380217
(71) Applicant: Dura Operating, LLC, Auburn Hills, MI 48326 (US)
(72) Inventor: HUANG, Shuo, West Bloomfield, MI Michigan 48326 (US); ZHANG, Linjun, Ann Arbor, MI Michigan 48105 (US)
(74) Representative: Bungartz Christophersen Partnerschaft mbB Patentanwälte

(57) **Abstract**

A method for performing advanced driver assistance system (ADAS) functions for a vehicle includes receiving a plurality of inputs from a plurality of sensors disposed on the vehicle, determining a pool of location candidates of the vehicle based on a first subset of the plurality of inputs, iteratively updating the pool of location candidates based on a second subset of the plurality of inputs, generating an estimate of vehicle location based on an average of location candidates, evaluating a confidence level of the estimate of vehicle location, generating a beyond line-of-sight situation awareness based on the plurality of inputs and locating the vehicle on a digital map based on the confidence level and the estimate of vehicle location, and performing ADAS functions based on the beyond line-of-sight situation awareness and location of the vehicle on the digital map.

## Description

### FIELD

The invention relates generally to a method and system for performing advanced driver assistance system functions for motor vehicles using precise vehicle localization and beyond line-of-sight situational awareness.

### BACKGROUND

The statements in this section merely provide background information related to the present disclosure and may or may not constitute prior art.

Motor vehicles have been designed with increasingly advanced technologies aimed at improving the safety, efficiency, and mobility of the motor vehicle. An example of such technologies includes advanced driver assistance systems. Generally, advanced driver assistance systems automate, adapt, or enhance vehicle systems in order to increase vehicle safety and/or operator driving performance. Advanced driver assistance systems may rely on inputs from multiple data sources, including LiDAR, sonar, ultrasound, radar, image processing from cameras, and inputs are possible from other sources separate from the motor vehicle itself such as vehicle-to-vehicle (V2V) or vehicle-to-Infrastructure (V2I) systems. Advanced driver assistance systems are designed to avoid accidents by offering technologies that alert the driver to potential problems or to avoid collisions by implementing safeguards, such as automatically activating an emergency brake. Operator driving performance may be improved by using features that enhance certain systems, such as automated lighting, automated parking, adaptive cruise control, automated braking, or improved blind spot elimination using camera technology.

These advanced driver assistance system functions are limited, in part, by how precisely the system can localize the motor vehicle relative to its surroundings. One method for precise localization of the motor vehicle includes simultaneous location and mapping using LiDAR sensors mounted to the motor vehicle. Another method for precise localization of the motor vehicle includes using a differential global positioning system (DGPS). However, the LiDAR sensors and DGPS are relatively expensive. Moreover, these methods require line-of-sight for detecting objects which thus limits the advanced driver assistance system functions available for use. While emerging V2V/V2I networks can provide information about distant vehicles or regions, this information still requires precise localization of the motor vehicle. Therefore, there is a need in the art for a method and system for providing precise localization by using low-cost sensors and developing new functions using V2V/V2I networks with precise localization.

### SUMMARY

A method for performing advanced driver assistance system (ADAS) functions for a vehicle is provided. The method includes receiving a plurality of inputs from a plurality of sensors disposed on the vehicle, determining a pool of location candidates of the vehicle based on a first subset of the plurality of inputs, iteratively updating the pool of location candidates based on a second subset of the plurality of inputs, generating an estimate of vehicle location based on an average of location candidates, evaluating a confidence level of the estimate of vehicle location, generating a beyond line-of-sight situation awareness based on the plurality of inputs and locating the vehicle on a digital map based on the confidence level and the estimate of vehicle location, and performing ADAS functions based on the beyond line-of-sight situation awareness and location of the vehicle on the digital map.

In one aspect, the first subset of the plurality of inputs includes GPS location data of the vehicle, vehicle-to-vehicle (V2V) data, and object detection data from at least one sensor mounted on the vehicle.

In another aspect, the second subset of the plurality of inputs includes GPS location data of the vehicle, V2V data, object detection data from the at least one sensor mounted on the vehicle, and vehicle operating conditions.

In another aspect, determining a pool of location candidates includes generating an initial group of location candidates of the vehicle based on the GPS location data and V2V data, generating a local lane-level map from the object detection data and the digital map, and determining the pool of location candidates from the initial group of location candidates that are consistent with the local lane-level map.

In another aspect, generating a local lane-level map includes fusing a distance to a centerline of a lane and an angle between a heading of the vehicle and the centerline with a longitude, a latitude, and a heading of the centerline of the lane in which the vehicle is located.

In another aspect, iteratively updating the pool of location candidates includes, for each location candidate, predicting an updated location candidate based on the vehicle operating conditions, generating a local lane-level map from the object detection data and the digital map, determining if the updated location candidate is consistent with the local lane-level map, the GPS location data and V2V data, and replacing the updated location candidate with another location candidate if the updated location candidate is inconsistent with either the local lane-level map or the GPS location data and V2V data.

In another aspect, evaluating a confidence level of the estimate of vehicle location includes comparing a position of the vehicle relative to a landmark detected by the sensor, determining if a predicted trajectory of the vehicle matches a geometry of a lane in which the vehicle is located, or comparing the characteristics of the estimate of vehicle location to limitations on vehicle dynamics.

In another aspect, the plurality of inputs further includes vehicle-to-infrastructure (V2I) data.

In another aspect, generating a beyond line-of-sight situation awareness based on the plurality of inputs includes locating objects on the digital map based on the V2I data and locating vehicles on the digital map based on the V2V data.

In another aspect, performing ADAS functions includes performing a chain collision analysis, providing a beyond line-of-sight hazard warning, updating the digital map, performing lane-level vehicle routing, and cooperatively adapting cruise control based on beyond line-of-sight vehicles.

In another aspect, the method includes preprocessing one or more of the plurality of inputs to produce a plurality of preprocessed inputs.

In another aspect, preprocessing one or more of the plurality of inputs includes checking a plausibility of one or more of the plurality of inputs by comparing the one or more plurality of inputs to physical constraints, synchronizing location coordinates for each of the plurality of inputs, calibrating one or more of the plurality of inputs, performing a time-delay observer prediction on any of the plurality of inputs having latency, and passing one or more of the plurality of inputs through a noise filter.

In another aspect, the method includes packaging the plurality of inputs and the estimate of vehicle location into an integrated information package and transmitting the integrated information package on a V2V or V2I network.

In another aspect, the plurality of inputs includes visual data provided by one or more cameras mounted on the vehicle and vehicle condition data provided by one or more sensors mounted on the motor vehicle, wherein the visual data includes road conditions, traffic accidents, vehicle congestion, or lane closure, and the vehicle condition data includes vehicle speed, acceleration/deceleration, yaw rate, emergency brake status, or steering angle.

In another embodiment, a method for performing advanced driver assistance system (ADAS) functions for a vehicle includes receiving GPS location data of the vehicle, vehicle to vehicle (V2V) data, visual data from a camera mounted on the vehicle, a digital map, and vehicle operating conditions, determining a pool of location candidates of the vehicle based on the GPS data, the V2V data, the visual data, and the digital map, iteratively updating the pool of location candidates based on the GPS data, the V2V data, the visual data, the digital map, and the vehicle operating conditions, generating an estimate of vehicle location based on an average of location candidates, evaluating a confidence level of the estimate of vehicle location, generating a beyond line-of-sight situation awareness based on the V2V data and locating the vehicle in the digital map based on the confidence level and the estimate of vehicle location, and performing ADAS functions based on the beyond line-of-sight situation awareness and location of the vehicle in the digital map.

In one aspect, the method further includes receiving vehicle-to-infrastructure (V2I) data, and generating the beyond line-of-sight situation awareness is also based on the V2I data.

In another aspect, determining a pool of location candidates includes generating an initial group of location candidates of the vehicle based on the GPS location data and V2V data by calculating a position estimate from the V2V data and generating location candidates within an overlap of the GPS location data and the position estimate, generating a local lane-level map from the visual data and the digital map, and determining the pool of location candidates from the initial group of location candidates that are within the local lane-level map.

In another aspect, iteratively updating the pool of location candidates includes, for each location candidate, predicting an updated location candidate based on the vehicle operating conditions, generating a local lane-level map from the visual data and the digital map, determining if the updated location candidate is consistent with the local lane-level map, the GPS location data and V2V data, and replacing the updated location candidate with another location candidate if the updated location candidate is inconsistent with either the local lane-level map or the GPS location data and V2V data.

In another aspect, performing ADAS functions includes performing a chain collision analysis, providing a beyond line-of-sight hazard warning, updating a digital map, performing lane-level vehicle routing, and adjusting cruise control based on beyond line-of-sight vehicles.

In yet another embodiment, a system in a vehicle is provided that includes a memory storing a digital map, a processor in communication with the memory and with one or more sensors in the vehicle. The processor includes a first control logic for receiving GPS data of the vehicle, vehicle to vehicle (V2V) data, object detection data, and vehicle operating conditions from the one or more sensors, a second control logic for determining a pool of location candidates of the vehicle based on the GPS data, the V2V data, the object detection data, and the digital map, a third control logic for iteratively updating the pool of location candidates based on the GPS data, the V2V data, the object detection data, the digital map, and the vehicle operating conditions, a fourth control logic for generating an estimate of vehicle location based on an average of location candidates, a fifth control logic for evaluating a confidence level of the estimate of vehicle location, a sixth control logic for generating a beyond line-of-sight situation awareness based on the V2V data and locating the vehicle in the digital map based on the confidence level and the estimate of vehicle location, and a seventh control logic for performing ADAS functions based on the beyond line-of-sight situation awareness and location of the vehicle in the beyond line-of-sight map.

Further aspects, examples, and advantages will become apparent by reference to the following description and appended drawings wherein like reference numbers refer to the same component, element or feature.

### BRIEF DESCRIPTION OF THE DRAWINGS

The drawings described herein are for illustration purposes only and are not intended to limit the scope of the present disclosure in any way. The components in the figures are not necessarily to scale, emphasis instead being placed upon illustrating the principles of the invention. Moreover, in the figures, like reference numerals designate corresponding parts throughout the views.
FIG. 1 is a schematic diagram of an exemplary motor vehicle having an advanced driver assistance system according to the principles of the present disclosure;
FIG. 2 is an exemplary roadway depicting the motor vehicle;
FIG. 3 is an information flow diagram of the advanced driver assistance system;
FIG. 4 is an information flow diagram of a sensor fusion subroutine of the advanced driver assistance system; and
FIG. 5 is an information flow diagram of an update subroutine of the sensor fusion subroutine.

### DETAILED DESCRIPTION

The following description is merely exemplary in nature and is not intended to limit the present disclosure, application or uses.

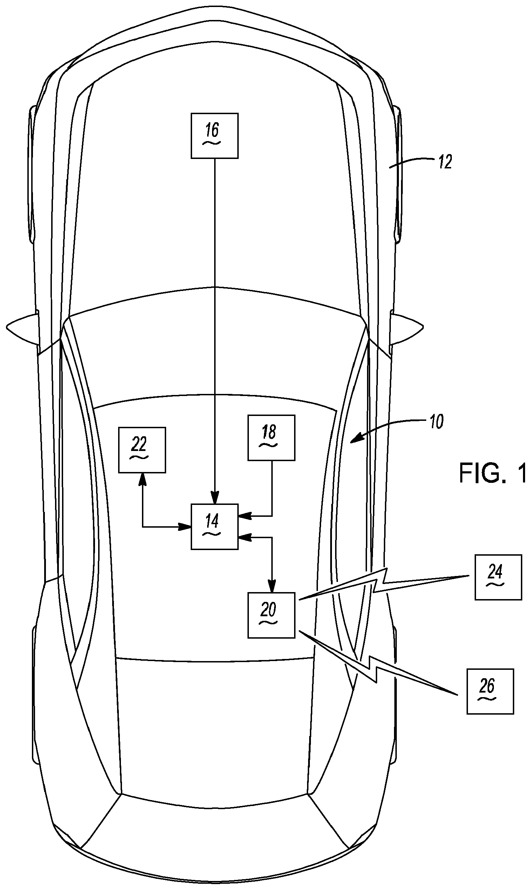

With reference to FIG. 1, an advanced driver assistance system (ADAS) according to the principles of the present disclosure is indicated by reference number 10. The ADAS 10 is used with an exemplary motor vehicle 12. The motor vehicle 12 is illustrated as a passenger vehicle, however, the motor vehicle 12 may be a truck, sport utility vehicle, van, motor home, or any other type of vehicle without departing from the scope of the present disclosure. The ADAS 10 may have various configurations without departing from the scope of the present disclosure but generally includes an ADAS controller 14 in communication with one or more vehicle sensors 16, a global positioning system (GPS) 18, a vehicle-to-vehicle (V2V) and vehicle-to-infrastructure (VSI) receiver/transmitter 20, and one or more vehicle control modules 22. The ADAS 10 is configured to perform various ADAS functions using a method for precise localization of the motor vehicle 12 and information integration, as will be described in greater detail below.

The ADAS controller 14 is a non-generalized, electronic control device having a preprogrammed digital computer or processor, memory or non-transitory computer readable medium used to store data such as control logic, instructions, image data, a digital map, lookup tables, etc., and a plurality of input/output peripherals or ports. The processor is configured to execute the control logic or instructions. The ADAS controller 14 may have additional processors or additional integrated circuits in communication with the processor, such as perception logic circuits for analyzing sensor data.

The vehicle sensors 16 are mounted to the motor vehicle 12 and generally include one or devices operable to sense objects and conditions external to the motor vehicle 12. For example, in one aspect the vehicle sensors 16 include a forward facing camera. In another aspect, the vehicle sensors 16 include a surround view system having cameras located at the front, left, right, and rear of the motor vehicle 12 to provide 360 degrees of overlapping coverage. In yet another aspect, the vehicle sensors 16 are radar or sonar sensors, or any other type of proximity sensors. Furthermore, it should be appreciated that the vehicle sensors 16 may include any number of sensors or cameras without departing from the scope of the disclosure. The vehicle sensors 16 are operable to collect or sense information in a predefined area surrounding the motor vehicle 12. In one aspect the vehicle sensors 16 include perception logic processors for processing the object detection data. In another aspect, the ADAS controller 14 includes perception logic processors for processing the object detection data from the vehicle sensors 16.

The GPS 18 is used to determine a location of the motor vehicle 12 relative to a fixed coordinate system, as is known in the art. GPS location data is communicated to the ADAS controller 14.

The V2V/V2I receiver/transmitter 20 is operable to receive and/or transmit wireless data to a V2V network 24 and/or a V2I network 26. The V2V network 24 includes other vehicles (vehicle-to-vehicle communication) in communication with the V2V network 24. The V2I network 26 includes infrastructure, such as parking lots, roadside equipment, traffic, road or weather condition networks, in communication with the V2I network 26.

The vehicle control modules 22 may include any number of control modules within the motor vehicle 12 that communicate with the ADAS controller 14 through the vehicle on-board CAN bus. For example, the vehicle control modules 22 may include one or more of a body control module, engine control module, transmission control module, supervisory control module, etc. The vehicle control modules 22 communicate vehicle operating condition data to the ADAS controller 14.

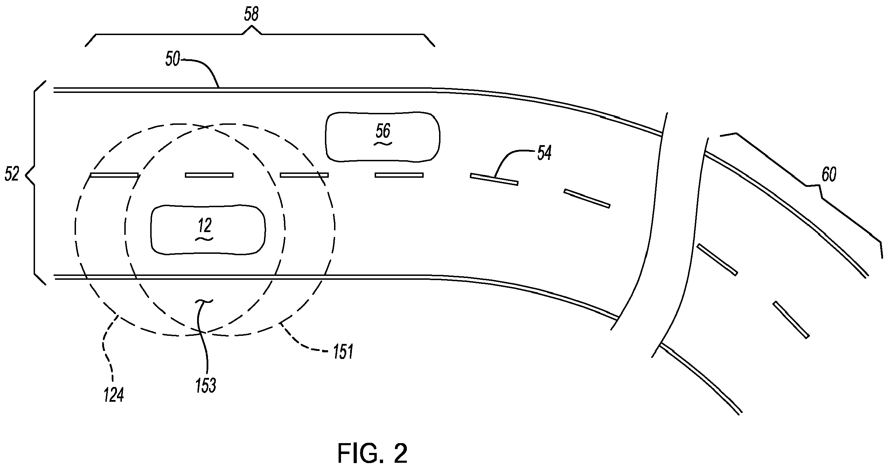

Turning now to FIG. 2, for purposes of explanation and example, the motor vehicle 12 equipped with the ADAS 10 is illustrated on an exemplary roadway 50. The roadway 50 generally includes a plurality of lanes 52 with at least one lane centerline 54. The roadway 50, with lane information including lane direction, number of lanes, known landmarks, etc., may be stored as a digital map by the ADAS 10. The motor vehicle 12 is located on the roadway 50 in one of the plurality of lanes 52. A distant motor vehicle 56 is illustrated on the roadway 50. The motor vehicle 12 generally includes a line-of-sight (LOS) range 58 and a beyond line-of-sight (BLOS) range 60 relative to the roadway 50. The LOS range 58 is that section of the roadway 50 that is detectable by the sensors 16 located on the motor vehicle 12. The BLOS range 60 is that section of the roadway 50 that is not detectable by the sensors 16, either due to range limitations of the sensors 16, obstacles in the roadway 50 that block detection, curves in the roadway 50, etc.

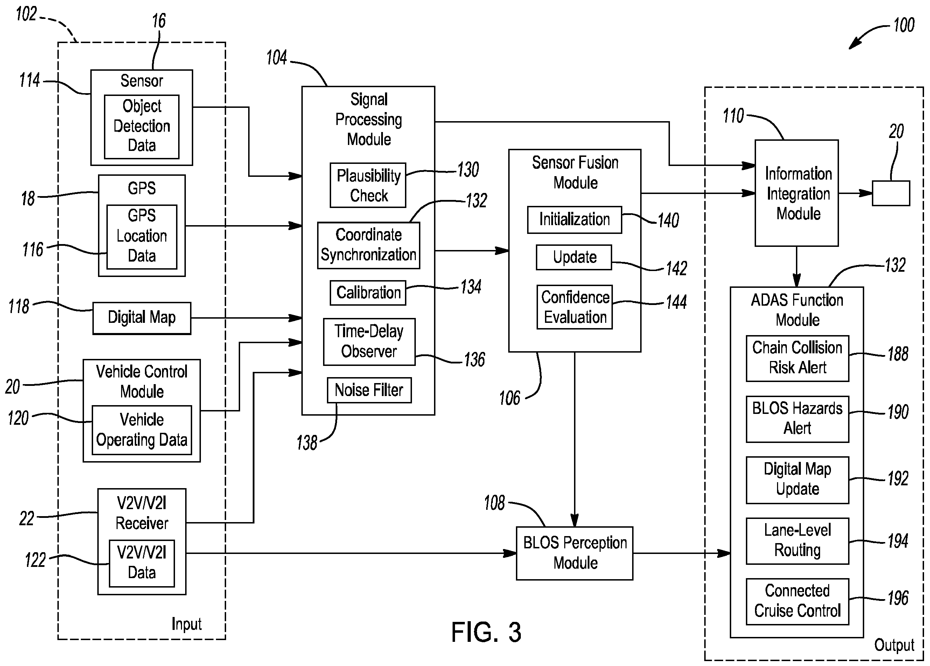

With reference to FIG. 3, and continued reference to FIG. 2, a method for performing ADAS functions using the ADAS 10 is illustrated in an information flow diagram and indicated generally by reference number 100. The method 100 includes modules, method steps, functions, or control logic executed by the ADAS controller 14 to determine a precise localization of the motor vehicle 12 relative to a digital map and to perform information integration to generate a beyond line-of-sight situational awareness which may be used to perform various ADAS functions using the ADAS 10. For example, the method 100 includes an input module 102, a signal preprocessing module 104, a sensor fusion module 106, a beyond line-of-sight (BLOS) perception module 108, an information integration module 110, and an ADAS function module 112.

The input module 102 includes a plurality of inputs received by the ADAS controller 14. The plurality of inputs includes, for example, object detection data 114, GPS data 116, a digital map 118, vehicle operating data 120, and V2V/V2I data 122. The object detection data 114 is provided by the sensors 16 using object detection algorithms. The object detection algorithms may provide lane information including lane index (e.g., the number of lanes 52), a distance to the lane centerline 54 from the motor vehicle 12, an angle between a lane direction and a heading direction of the motor vehicle 12, a relative position of the motor vehicle 12 to any detected landmarks, a distance from the motor vehicle 12 to the distant motor vehicle 56 in the LOS range 58, and/or road information detected by the sensors 16 (e.g., icy surface, bumps/holes, road closure signs, etc.)

The GPS data 116 is provided by the GPS 18 and includes a longitude, latitude, and heading direction of the motor vehicle 12. The GPS data 116 has an error range, indicated by a circle 124 in FIG. 2, in which the motor vehicle 12 may be located. The digital map 118 may be stored by the ADAS controller 14 in memory, or received from a navigation module, etc. The digital map 118 generally includes information regarding the roadway 50 and provides precise location information of lanes 52 and landmarks, geometric features (e.g., curvature) and topologic features of the roadway 50, (e.g., connection information), and/or traffic information.

The vehicle operating data 120 includes information relating to the operating conditions of the motor vehicle 12 and is received from the vehicle CAN bus in communication with the vehicle control modules 22. The vehicle operating data provides a speed of the motor vehicle 12, a yaw rate of the motor vehicle 12, acceleration/deceleration information of the motor vehicle 12, emergency brake activation information, a steering angle of the motor vehicle 12, and/or left/right turning light activation information.

The V2V/V2I data 122 is provided by the V2V/V2I receiver/transmitter 20 from the V2V network 24 and/or the V2I network 26. For example, the V2V/V2I data 122 includes motion information of other vehicles, such as the distant motor vehicle 56, within the V2V network 24. The motion information may include location information (e.g. longitude, latitude, and vehicle heading), speed and yaw rate, emergency brake activation information, intended route information provided by a navigation system, and information regarding the motor vehicle 12 as measured by other distant vehicles such as measured by the distant vehicle 56. The V2V/V2I data 122 may also include information received from the V2I network 26 and may include road information such as speed limits, road conditions, and/or local traffic information.

The plurality of inputs are communicated to the signal preprocessing module 104. The signal preprocessing module 104 is configured to clean and synchronize the data provided by the input module 102. The signal preprocessing module 104 includes five functions, subroutines, control logic, or method steps executed by the ADAS controller 14 including a plausibility check 130, a coordinate synchronization function 132, a calibration function 134, a time-delay observer function 136, and a noise filter 138. The plausibility check 130 is configured to check the plausibility of the input data by considering physical constraints. For example, the speed or the yaw rate from the vehicle control modules 22 may be compared to thresholds, and if the speed or yaw rates exceed the thresholds the speed or yaw rate is flagged as erroneous. In another example, GPS location data may be compared to previous GPS location data and if the difference exceeds a threshold, the GPS location data may be flagged as erroneous.

The coordinate synchronization function 132 is configured to put all the input data in the same coordinate system in order to avoid unexpected problems in the subsequent situation perception. The calibration function 134 is configured to evaluate or modify the input data based on each inputs' different measurement properties (e.g., update rate, bias/variance of measurement errors, latencies, etc.).

The time-delay observer function 136 is configured to adjust the input data due to latency in the ADAS 10. Due to latency, the current measurements of sensors actually reveal the history data rather than the current state of the motor vehicle 12. For example, the latency of a standard 1 Hz GPS may be larger than 1 second, which leads to measurement errors larger than 30 meters on a highway. Thus, the time-delay observer function 136 is designed to predict the current state of the motor vehicle 12 based on the delayed measurement. The noise filter 138 is configured to eliminate any high-frequency noise in the input data, for example in the speed and yaw rate data. The noise filter 138 may include a low-pass filter or a Kalman filter.

The processed data from the signal preprocessing module 104 is communicated to the sensor fusion module 106. The sensor fusion module 106 is configured to fuse the processed data to determine a precise estimate of the location of the motor vehicle 12. The sensor fusion module 106 includes three functions, subroutines, method steps, or control logic including an initialization subroutine 140, an update subroutine 142, and a confidence evaluation subroutine 144.

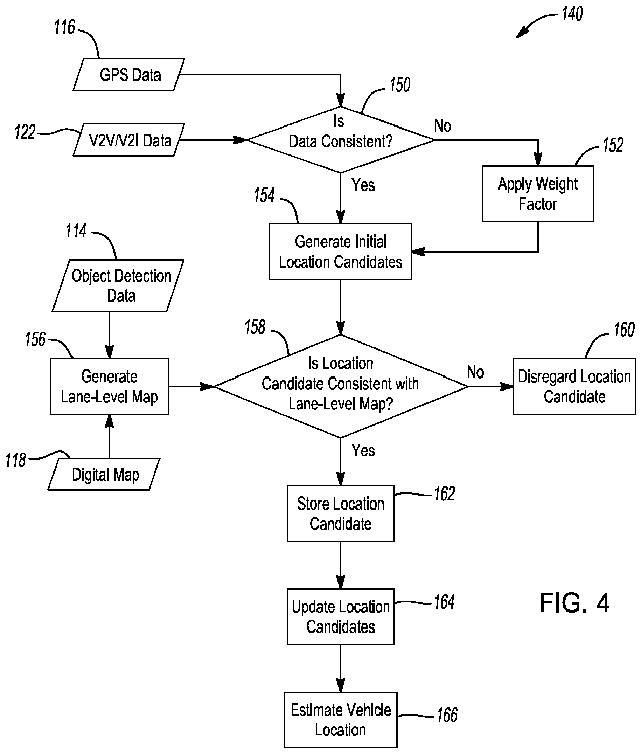

The initialization subroutine 140 is used to initialize an estimate of vehicle location by fusing the GPS data 116, the V2V/V2I data 122, the object detection data 114, and the digital map 118. For example, turning to FIG. 4, the initialization subroutine 140 is illustrated in an information flow diagram and begins at step 150 where the GPS data 116 is compared with the V2V/V2I data 122 to determine if the GPS data 116 is consistent with the V2V/V2I data 122. Here, the GPS 18 measures the absolute position of the motor vehicle 12 with an error, while the V2V/V2I data 122 provides the location of other distant vehicles and the relative position between the distant vehicles and the motor vehicle 12, which can be used to calculate the position of the motor vehicle 12. The location estimate of the motor vehicle 12 based on the V2V/V2I data 122 is indicated by circle 151 in FIG. 2. If the data is not consistent, i.e. the estimates 124 and 151 do not overlap, the method proceeds to step 152 where a weight factor is applied to the data to reduce the error of the data.

If the data is consistent, the method proceeds to step 154 where a first group of initial location candidates are generated. As noted above, due to measurement errors, the GPS data 116 and the V2V/V2I data 122 may lead to two regions 124, 151 of possible locations for the motor vehicle 12. Where the two regions overlap, indicated by reference number 153 in FIG. 2, a number of location candidates, or particles, are generated. A sufficient number of location candidates are chosen to cover the region 153.

At step 156 a local lane-level map is generated from the object detection data 114 and the digital map 118. The local lane-level map is a fusion of the digital map 118 and an estimate of the location of the motor vehicle 12 relative to the lanes 52. The digital map includes information about the longitude, the latitude, and the heading angle of the centerline 54 of the lane 52 that the motor vehicle 12 occupies. The object detection data 114 is used to measure the distance of the motor vehicle 12 to the centerline 54 and the angle between the heading of the motor vehicle 12 and the centerline 54.

At step 158 the initial location candidates generated at step 154 are compared with the local lane-level map generated at step 156 to determine if each of the location candidates is consistent with the local lane-level map. If the initial location candidate is inconsistent with the local lane-level map, the initial location candidate is discarded at step 160. If the initial location candidate is consistent with the local lane-level map, the initial location candidate is stored in memory at step 162 to create a pool or group of location candidates.

Next, at step 164, the stored pool of location candidates are updated using the update subroutine 142, as will be described below, by iteratively and randomly selecting each of the particles from the pool of location candidates. At step 166 the location of the motor vehicle 12 is estimated from a weighted average of the particles obtained at step 164.

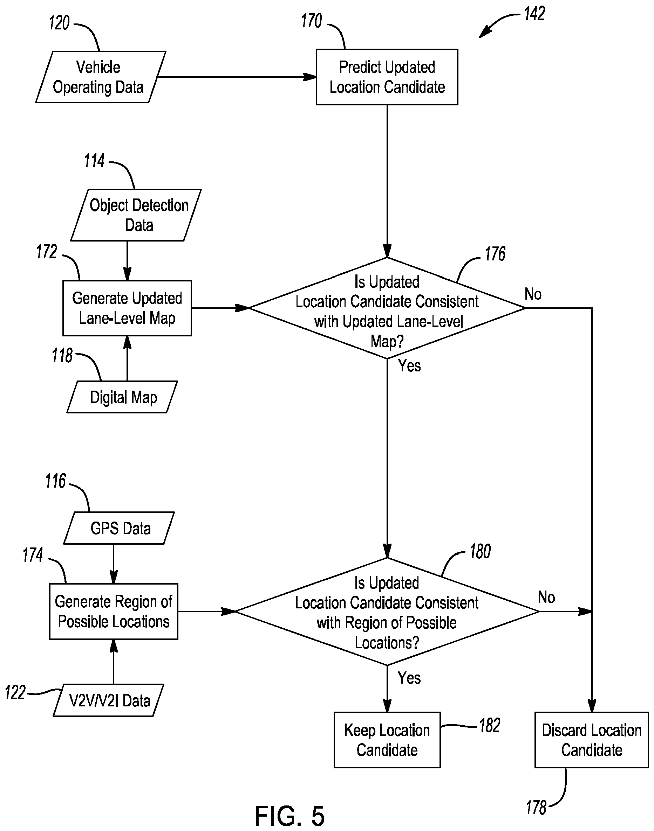

The update subroutine 142 is designed such that the initial location candidates evolve with the data received from the sensors 16, the GPS 18, the vehicle control modules 22, and the V2V/V2I transmitter/receiver 20. For example, turning to FIG. 5, the update subroutine 142 is illustrated in an information flow diagram and begins at step 170 where, for one of the location candidates or particles, a prediction of the updated location of the location candidate is made based on the vehicle operating data 120 to provide a predicted updated location candidate. For example, the speed and yaw rate information obtained from the vehicle control modules 22 are used for predicting the current particle locations from the initial particle locations. Measurement errors in speed and yaw rate are explicitly considered in the prediction. In one embodiment, the Haversine formula is used to calculate the longitude and the latitude of each updated location candidate.

At step 172 an updated local lane-level map is generated from the object detection data 114 and the digital map 118. The updated local lane-level map is a fusion of the digital map 118 and an estimate of the location of the motor vehicle 12 relative to the lanes 52. The digital map includes information about the longitude, the latitude, and the heading angle of the centerline 54 of the lane 52 that the motor vehicle 12 occupies. The object detection data 114 is used to measure the distance of the motor vehicle 12 to the centerline 54 and the angle between the heading of the motor vehicle 12 and the centerline 54.

At step 174 the region 153 of possible vehicle locations is generated based on the GPS data 116 and the V2V/V2I data 122. The region 153 of possible vehicle locations includes the region where the GPS data 116 and the V2V/V2I data 122 overlaps, as described above.

At step 176 the updated location candidate generated at step 170 is compared with the updated local lane-level map generated at step 172 to determine if the location candidate is consistent with the updated local lane-level map. If the updated location candidate is inconsistent with the updated local lane-level map, the updated location candidate is discarded at step 178 and another location candidate or particle is chosen for updating. If the updated location candidate is consistent with the updated local lane-level map, the method proceeds to step 180 where the updated location candidate is compared with the region 153 of possible vehicle locations to determine if the updated location candidate is within the region 153 of possible vehicle locations. If the updated location candidate is not within the region 153 of possible vehicle locations, the updated location candidate is discarded at step 178 and another location candidate or particle is chosen for updating. If the updated location candidate is within the region 153 of possible vehicle locations, the method proceeds to step 182 where the updated location candidate is kept and used in the next iterative run of the update subroutine 142.

Returning now to FIG. 3, the confidence evaluation subroutine 144 is used to evaluate the probability that the estimate of location of the motor vehicle 12 is the real location. The confidence evaluation subroutine 144 may use various processes. For example, if a landmark is detected by the sensors 16, the relative position between the motor vehicle 12 and the landmark may be used for the confidence evaluation. In another example, the estimated historical trajectory of the motor vehicle 12 is compared with the road geometry from the digital map 118 for the confidence evaluation. Moreover, a plausibility check using the limitations in vehicle dynamics (e.g., speed constraints, steering constraints, etc.) may be also used to evaluate the confidence of the estimate of location of the motor vehicle 12.

The BLOS perception module 108 receives the V2V/V2I data 122 as well as the estimate of location of the motor vehicle 12 from the sensor fusion module 106 to generate a beyond line-of-sight (BLOS) situation awareness. The BLOS situation awareness allows the ADAS 10 to be aware of large-scale traffic scenarios by exploiting the estimate of location of the motor vehicle 12 and the V2V/V2I data 122. The BLOS perception module 108 locates all hazards and other risks in the digital map 118, which provides real-time road conditions, and locates all vehicles with motion information (e.g., speed, acceleration/deceleration, yaw rate, etc.) in the digital map 118, which provides real-time traffic information, and locates the motor vehicle 12 on the digital map 118.

The information integration module 110 receives the preprocessed inputs from the signal preprocessing module 104 as well as the estimate of location of the motor vehicle 12 from the sensor fusion module 106 and integrates the data for broadcasting on the V2V network 24 and/or the V2I network 26. For example, the information integration module 110 is used to package object information extracted from the object detection data 114 that may contain road condition information (e.g., icy surface, bumps, holes, etc.), traffic accidents, congestion data, lane closure/rearrangement due to construction, and index of occupied lane. The estimate of location of the motor vehicle 12 is also packaged with longitude, latitude, and heading direction of the motor vehicle 12. Additionally, motion information of the motor vehicle 12 including speed, acceleration/deceleration, yaw rate, emergency brake activation, and steering angle is also packaged. The integrated information is then broadcast using the V2V/V2I transmitter/receiver 20 to the V2V network 24 and/or the V2I network 26.

The ADAS function module 112 is configured to perform conventional ADAS functions that rely on the information limited in the LOS range 58 and to perform ADAS functions that exploit the beyond line-of-sight information provided by the BLOS perception module 108. These functions include a chain collision warning 188, a BLOS hazard alert 190, a digital map update 192, a lane-level routing function 194, and a connected cruise control function 196. The chain collision warning 188 includes monitoring the location and the motion of distant vehicles in the BLOS range 60 and evaluating the collision risk of these distant vehicles based on the distance between the distant vehicles and relative speed of the distant vehicles. If a collision risk is detected, the ADAS 10 generates a warning and suggests a safe vehicle-following distance to the operator of the motor vehicle 12. The BLOS hazard alert 190 includes monitoring whether information regarding a hazard from a distant vehicle via the V2V network 24 is received. If a hazard alert is received, the ADAS 10 will generate a hazard warning to the motor vehicle 12, which may include the hazard type, to provide the driver sufficient time to take action to avoid the potential risks. The digital map update 192 includes monitoring the V2V network 24 and V2I network 26 to determine if the information on the digital map 118 has changed and updating the digital map 118 as necessary. For example, if a lane 52 is temporarily closed due to construction, the digital map update 192 will update the digital map 118 based on information received over the V2V network 24 and V2I network 26. The lane-level routing function 194 uses the lane-level map with integrated hazard locations and motion and location of vehicles to determine an optimal route with lane suggestions to avoid hazards, traffic congestion, etc. The connected cruise control function 196 cooperatively adapts the speed of the motor vehicle 12 based on the location and motion data of distant vehicles via the V2V network 24.

The description of the invention is merely exemplary in nature and variations that do not depart from the gist of the invention are intended to be within the scope of the invention. Such variations are not to be regarded as a departure from the spirit and scope of the invention.

## Claims

1. A method for performing advanced driver assistance system (ADAS) functions for a vehicle, the method comprising:
receiving a plurality of inputs from a plurality of sensors disposed on the vehicle;
determining a pool of location candidates of the vehicle based on a first subset of the plurality of inputs;
iteratively updating the pool of location candidates based on a second subset of the plurality of inputs;
generating an estimate of vehicle location based on an average of location candidates;
evaluating a confidence level of the estimate of vehicle location;
generating a beyond line-of-sight situation awareness based on the plurality of inputs and locating the vehicle on a digital map based on the confidence level and the estimate of vehicle location; and
performing ADAS functions based on the beyond line-of-sight situation awareness and location of the vehicle on the digital map.

2. The method of claim 1, wherein the first subset of the plurality of inputs includes GPS location data of the vehicle, vehicle-to-vehicle (V2V) data, and object detection data from at least one sensor mounted on the vehicle and/or wherein the second subset of the plurality of inputs includes GPS location data of the vehicle, V2V data, object detection data from the at least one sensor mounted on the vehicle, and vehicle operating conditions.

3. The method of claim 2, wherein determining a pool of location candidates includes generating an initial group of location candidates of the vehicle based on the GPS location data and V2V data, generating a local lane-level map from the object detection data and the digital map, and determining the pool of location candidates from the initial group of location candidates that are consistent with the local lane-level map, wherein the step of generating a local lane-level map preferably includes fusing a distance to a centerline of a lane and an angle between a heading of the vehicle and the centerline with a longitude, a latitude, and a heading of the centerline of the lane in which the vehicle is located.

4. The method of one of the claims 2 or 3, wherein iteratively updating the pool of location candidates includes, for each location candidate, predicting an updated location candidate based on the vehicle operating conditions, generating a local lane-level map from the object detection data and the digital map, determining if the updated location candidate is consistent with the local lane-level map, the GPS location data and V2V data, and replacing the updated location candidate with another location candidate if the updated location candidate is inconsistent with either the local lane-level map or the GPS location data and V2V data.

5. The method of one of the preceding claims, wherein evaluating a confidence level of the estimate of vehicle location includes comparing a position of the vehicle relative to a landmark detected by the sensor, determining if an estimated trajectory of the vehicle matches a geometry of a lane in which the vehicle is located, or comparing the characteristics of the estimate of vehicle location to limitations on vehicle dynamics.

6. The method of one of the preceding claims, wherein the plurality of inputs includes vehicle-to-infrastructure (V2I) data.

7. The method of claim 6, wherein generating a beyond line-of-sight situation awareness based on the plurality of inputs includes locating objects on the digital map based on the V2I data and locating vehicles on the digital map based on the V2V data.

8. The method of one of the preceding claims, wherein performing ADAS functions includes performing a chain collision analysis, providing a beyond line-of-sight hazard warning, updating the digital map, performing lane-level vehicle routing, and cooperative adaptive cruise control based on beyond line-of-sight vehicles.

9. The method of one of the preceding claims, further comprising preprocessing one or more of the plurality of inputs to produce a plurality of preprocessed inputs, wherein preprocessing one or more of the plurality of inputs preferably includes checking a plausibility of one or more of the plurality of inputs by comparing the one or more plurality of inputs to physical constraints, synchronizing location coordinates for each of the plurality of inputs, calibrating one or more of the plurality of inputs, performing a time-delay observer prediction on any of the plurality of inputs having latency, and passing one or more of the plurality of inputs through a noise filter.

10. The method of one of the preceding claims, further comprising packaging the plurality of inputs and the estimate of vehicle location into an integrated information package and transmitting the integrated information package on a V2V or V2I network, wherein the plurality of inputs preferably includes visual data provided by one or more cameras mounted on the vehicle and vehicle condition data provided by one or more sensors mounted on the motor vehicle, wherein the visual data includes road conditions, traffic accidents, vehicle congestion, or lane closure, and the vehicle condition data includes vehicle speed, acceleration/deceleration, yaw rate, emergency brake status, or steering angle.

11. A method for performing advanced driver assistance system (ADAS) functions for a vehicle, the method comprising:
receiving GPS location data of the vehicle, vehicle to vehicle (V2V) data, visual data from a camera mounted on the vehicle, a digital map, and vehicle operating conditions;
determining a pool of location candidates of the vehicle based on the GPS data, the V2V data, the visual data, and the digital map;
iteratively updating the pool of location candidates based on the GPS data, the V2V data, the visual data, the digital map, and the vehicle operating conditions;
generating an estimate of vehicle location based on an average of location candidates;
evaluating a confidence level of the estimate of vehicle location;
generating a beyond line-of-sight situation awareness based on the V2V data and locating the vehicle in the digital map based on the confidence level and the estimate of vehicle location; and
performing ADAS functions based on the beyond line-of-sight situation awareness and location of the vehicle in the digital map.

12. The method of claim 11, further comprising receiving vehicle-to-infrastructure (V2I) data, and generating the beyond line-of-sight situation awareness is also based on the V2I data.

13. The method of claims 11 or 12, wherein determining a pool of location candidates includes generating an initial group of location candidates of the vehicle based on the GPS location data and V2V data by calculating a position estimate from the V2V data and generating location candidates within an overlap of the GPS location data and the position estimate, generating a local lane-level map from the visual data and the digital map, and determining the pool of location candidates from the initial group of location candidates that are within the local lane-level map.

14. The method of one of the claims 11 to 13, wherein iteratively updating the pool of location candidates includes, for each location candidate, predicting an updated location candidate based on the vehicle operating conditions, generating a local lane-level map from the visual data and the digital map, determining if the updated location candidate is consistent with the local lane-level map, the GPS location data and V2V data, and replacing the updated location candidate with another location candidate if the updated location candidate is inconsistent with either the local lane-level map or the GPS location data and V2V data, and wherein performing ADAS functions preferably includes performing a chain collision analysis, providing a beyond line-of-sight hazard warning, updating a digital map, performing lane-level vehicle routing, and controlling vehicle motion based on beyond line-of-sight vehicles.

15. A system in a vehicle, the system comprising:
a memory storing a digital map;
a processor in communication with the memory and with one or more sensors in the vehicle, the processor having:
a first control logic for receiving GPS data of the vehicle, vehicle to vehicle (V2V) data, object detection data, and vehicle operating conditions from the one or more sensors;
a second control logic for determining a pool of location candidates of the vehicle based on the GPS data, the V2V data, the object detection data, and the digital map;
a third control logic for iteratively updating the pool of location candidates based on the GPS data, the V2V data, the object detection data, the digital map, and the vehicle operating conditions;
a fourth control logic for generating an estimate of vehicle location based on an average of location candidates;
a fifth control logic for evaluating a confidence level of the estimate of vehicle location;
a sixth control logic for generating a beyond line-of-sight situation awareness based on the V2V data and locating the vehicle in the digital map based on the confidence level and the estimate of vehicle location; and
a seventh control logic for performing ADAS functions based on the beyond line-of-sight situation awareness and location of the vehicle in the beyond line-of-sight map.
